# EUROPÄISCHE PATENTANMELDUNG

(11) **EP 3 246 120 A1**
(43) Veröffentlichungstag der Anmeldung: **22.11.2017**
(21) Anmeldenummer: 16170048.9
(22) Anmeldetag: 18.05.2016
(51) Int. Cl.: B23B 51/00

(54) **METALLBOHRER**

(71) Anmelder: HILTI Aktiengesellschaft, 9494 Schaan (LI)
(72) Erfinder: Foser, Thomas, 9496 Balzers (LI)
(74) Vertreter: Hilti Aktiengesellschaft Corporate Intellectual Property

(57) **Zusammenfassung**

Bohrer zum handgeführten Bohren eines Sacklochs mit einem Sacklochdurchmesser und einer Sacklochtiefe in ein Werkstück aus Metall, umfassend einen Schaft, welcher eine Bohrrichtung definiert und eine in der Bohrrichtung orientierte Drehachse aufweist, wobei der Schaft an seinem in die Bohrrichtung weisenden Ende eine Schneidkante und in einem die Sacklochtiefe definierenden Abstand zur Schneidkante eine Anschlagschulter aufweist, wobei die Schneidkante durch Drehung um die Drehachse den Sacklochdurchmesser definiert, wobei der Schaft einen sich entlang der Drehachse ändernden Hüllkreisdurchmesser aufweist, welcher an der Anschlagschulter grösser als der Sacklochdurchmesser ist, wobei der Schaft einen zwischen der Schneidkante und der Anschlagschulter angeordneten ersten Schaftabschnitt aufweist, welcher bis an die Anschlagschulter heranreicht und in welchem der Hüllkreisdurchmesser kleiner als der Sacklochdurchmesser ist.

## Beschreibung

Die vorliegende Erfindung betrifft einen Bohrer zum handgeführten Bohren eines Sacklochs in ein Werkstück aus Metall.

Es sind Bohrer bekannt, welche einen eine Bohrrichtung definierenden Schaft mit einer Schneidkante und einer Anschlagschulter aufweisen, deren Abstand zueinander eine Sacklochtiefe definiert. Üblicherweise weist der Schaft zwischen der Schneidkante und der Anschlagschulter einen Hüllkreisdurchmesser auf, welcher so gross wie ein von der Schneidkante definierter Sacklochdurchmesser ist. Bei einem handgeführten Bohren kommt es vor, dass der Bohrer unabsichtlich verschwenkt wird, so dass der Schaft das Sackloch während des Bohrens aufweitet oder beschädigt.

Der Erfindung liegt die Aufgabe zu Grunde, einen Bohrer zur Verfügung zu stellen, mit dem die Gefahr der Aufweitung oder Beschädigung des Sacklochs reduziert ist.

Die Aufgabe ist gelöst bei einem Bohrer zum handgeführten Bohren eines Sacklochs mit einem Sacklochdurchmesser und einer Sacklochtiefe in ein Werkstück aus Metall, umfassend einen Schaft, welcher eine Bohrrichtung definiert und eine in der Bohrrichtung orientierte Drehachse aufweist, wobei der Schaft an seinem in die Bohrrichtung weisenden Ende eine Schneidkante und in einem die Sacklochtiefe definierenden und entgegen die Bohrrichtung gemessenen Abstand zur Schneidkante eine Anschlagschulter aufweist, wobei die Schneidkante durch Drehung um die Drehachse den Sacklochdurchmesser definiert, wobei der Schaft einen sich entlang der Drehachse ändernden Hüllkreisdurchmesser aufweist, welcher an der Anschlagschulter grösser als der Sacklochdurchmesser ist, wobei der Schaft einen zwischen der Schneidkante und der Anschlagschulter angeordneten ersten Schaftabschnitt aufweist, welcher bis an die Anschlagschulter heranreicht und in welchem der Hüllkreisdurchmesser kleiner als der Sacklochdurchmesser ist. Bevorzugt weist der Schaft an seinem in die Bohrrichtung weisenden Ende zwei oder mehr Schneidkanten auf, welch durch Drehung um die Drehachse den Sacklochdurchmesser gemeinsam definieren und besonders bevorzugt symmetrisch um die Drehachse angeordnet sind.

Ein Hüllkreisdurchmesser im Sinne der Erfindung ist der Durchmesser des kleinstmöglichen Kreises, welcher mit einem Kreismittelpunkt auf der Drehachse den Schaft noch vollständig umhüllt. Mit anderen Worten, für jeden Punkt entlang der Drehachse ist die Kreisfläche des Hüllkreises ist die Fläche, welche der Schaft bei Drehung um die Drehachse überdeckt. Bei einer kreisförmigen Umfangslinie ist der Hüllkreisdurchmesser gleich dem Durchmesser der Umfangslinie, also dem Schaftdurchmesser. Abweichungen der Umfangslinie von der Kreisform nach innen beeinflussen den Hüllkreisdurchmesser nicht, Abweichungen nach aussen vergrössern dagegen den Hüllkreisdurchmesser.

Bei einer bevorzugten Ausführungsform weist der Schaft einen zwischen der Schneidkante und dem ersten Schaftabschnitt angeordneten zweiten Schaftabschnitt auf, welcher bis an die Schneidkante heranreicht und in welchem der Hüllkreisdurchmesser konstant und gleich gross wie der Sacklochdurchmesser ist. Besonders bevorzugt reicht der zweite Schaftabschnitt an den ersten Schaftabschnitt heran.

Bei einer bevorzugten Ausführungsform reicht der erste Schaftabschnitt an die Schneidkante heran.

Bei einer bevorzugten Ausführungsform bestehen der erste Schaftabschnitt und die Schneidkante aus demselben Material und sind miteinander einstückig ausgebildet.

Bei einer bevorzugten Ausführungsform steigt der Hüllkreisdurchmesser in dem ersten Schaftabschnitt bereichsweise, besonders bevorzugt durchgehend, in der Bohrrichtung an. Besonders bevorzugt steigt der Hüllkreisdurchmesser in dem ersten Schaftabschnitt linear an, wodurch eine konische Hüllfläche gebildet ist. Die konische Hüllfläche ist gegenüber der Bohrrichtung um einen Konuswinkel geneigt, welcher bevorzugt zwischen 2° und 10° und besonders bevorzugt mindestens 5° beträgt.

Bei einer bevorzugten Ausführungsform ist der Hüllkreisdurchmesser in dem ersten Schaftabschnitt bereichsweise, besonders bevorzugt durchgehend, konstant, wodurch eine kreiszylindrische Hüllfläche gebildet ist.

Bei einer bevorzugten Ausführungsform weist der Schaft an seinem in die Bohrrichtung weisenden Ende eine Zentrierspitze auf, durch welche die Drehachse verläuft.

Bei einer bevorzugten Ausführungsform weist die Anschlagschulter eine senkrecht zur Drehachse ausgerichtete und in die Bohrrichtung weisende Anschlagfläche auf.

Bei einer bevorzugten Ausführungsform weist der Schaft an seinem entgegen die Bohrrichtung weisenden Ende einen Befestigungsabschnitt für eine vorübergehende Befestigung an einer handgeführten Bohrmaschine auf. Besonders bevorzugt ist der Befestigungsabschnitt als Einsteckende ausgebildet.

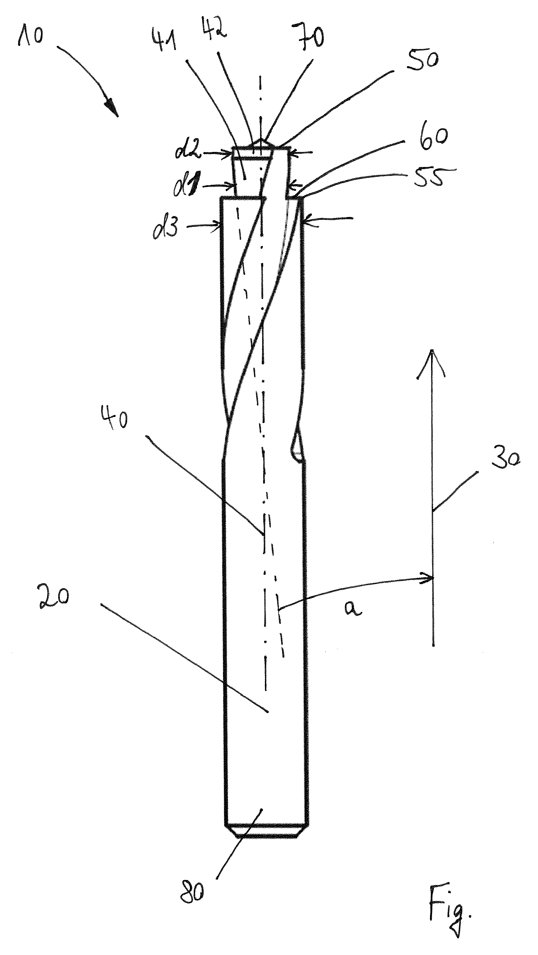

Die Erfindung wird im Folgenden unter Bezugnahme auf die Zeichnung näher erläutert.

Die Figur zeigt einen Bohrer 10, welcher sich zum handgeführten Bohren eines Sacklochs in ein nicht dargestelltes Werkstück aus Metall eignet, in einer Seitenansicht. Der Bohrer 10 umfasst einen Schaft 20, welcher eine Bohrrichtung 30 definiert und eine in der Bohrrichtung 30 orientierte Drehachse 40 aufweist. An seinem in die Bohrrichtung 30 weisenden Ende weist der Schaft 20 eine Schneidkante 50 und eine nicht dargestellte weitere Schneidkante auf, welche in Bezug auf die Drehachse 40 einander gegenüberliegend und symmetrisch angeordnet sind und durch Drehung um die Drehachse 40 gemeinsam einen Sacklochdurchmesser des gebohrten Sacklochs definieren. In einem zur Schneidkante 50 weist der Schaft 20 eine Anschlagschulter 55 mit einer senkrecht zur Drehachse 40 ausgerichteten und in die Bohrrichtung 30 weisenden Anschlagfläche 60 auf. Während des Bohrens des Sacklochs schlägt die Anschlagschulter 55 an einer Oberfläche des Werkstücks an, so dass der entgegen die Bohrrichtung 30 gemessene Abstand der Anschlagfläche 60 zur Schneidkante 50 eine Sacklochtiefe des gebohrten Sacklochs definiert. An seinem entgegen die Bohrrichtung 30 weisenden Ende weist der Schaft 20 ein Einsteckende 80 für eine vorübergehende Befestigung an einer handgeführten Bohrmaschine auf.

Der Schaft 20 weist einen sich entlang der Drehachse 40 ändernden Hüllkreisdurchmesser auf. In einem zwischen der Schneidkante 50 und der Anschlagschulter 55 angeordneten ersten Schaftabschnitt 41 des Schaftes 40 ist der Hüllkreisdurchmesser d1 kleiner als der Sacklochdurchmesser. In einem zwischen der Schneidkante 50 und dem ersten Schaftabschnitt 41 angeordneten zweiten Schaftabschnitt 42 des Schaftes 40 ist der Hüllkreisdurchmesser d2 konstant und gleich gross wie der Sacklochdurchmesser. An der Anschlagschulter 55 ist der Hüllkreisdurchmesser d3 grösser als der Sacklochdurchmesser. Während sich der erste Schaftabschnitt 41 unmittelbar an die Anschlagschulter 55 anschliesst, schliesst sich der zweite Schaftabschnitt 42 einerseits unmittelbar an den ersten Schaftabschnitt 41 und andererseits unmittelbar an die Schneidkante 50 an.

Der Hüllkreisdurchmesser d1 in dem ersten Schaftabschnitt 41 steigt durchgehend in der Bohrrichtung 30 liner an, so dass eine konische Hüllfläche gebildet ist. Die konische Hüllfläche ist gegenüber der Bohrrichtung 30 um einen Konuswinkel a geneigt, welcher 5° beträgt. Der Hüllkreisdurchmesser d2 in dem zweiten Schaftabschnitt 42 ist durchgehend konstant, so dass eine kreiszylindrische Hüllfläche gebildet ist, welche die Schneidkante 50 unter Umständen vor übermässigem Verschleiss schützt.

Weiterhin weist der Schaft 20 an seinem in die Bohrrichtung 30 weisenden Ende eine Zentrierspitze 70 auf, durch welche die Drehachse 40 verläuft. Der gesamte Schaft 40 einschliesslich die Schneidkante 50 und die Zentrierspitze 70 ist aus einem Stück gebildet, so dass die Anschlagschulter 55, der erste Schaftabschnitt 41, der zweite Schaftabschnitt 42 und die Schneidkante 50 aus demselben Material, bevorzugt einem Metall oder einer Legierung, besonders bevorzugt einem Stahl, bestehen.

Zur Abfuhr von Metallspänen, welche während des Bohrens von der Schneidkante 50 und der weiteren Schneidkante erzeugt werden, weist der Schaft 20 zwei spiralförmige Nuten 90 auf, welche sich durch die Anschlagschulter 55, den ersten Schaftabschnitt 41 und den zweiten Schaftabschnitt 42 hindurch erstrecken und von der Schneidkante 50 beziehungsweise von der weiteren Schneidkante begrenzt werden.

Die Erfindung wurde anhand des Beispiels eines Metallbohrers beschrieben. Es wird jedoch darauf hingewiesen, dass der erfindungsgemässe Bohrer auch für andere Zwecke geeignet ist.

## Patentansprüche

1. Bohrer zum handgeführten Bohren eines Sacklochs mit einem Sacklochdurchmesser und einer Sacklochtiefe in ein Werkstück aus Metall, umfassend einen Schaft, welcher eine Bohrrichtung definiert und eine in der Bohrrichtung orientierte Drehachse aufweist, wobei der Schaft an seinem in die Bohrrichtung weisenden Ende eine Schneidkante und in einem die Sacklochtiefe definierenden und entgegen die Bohrrichtung gemessenen Abstand zur Schneidkante eine Anschlagschulter aufweist, wobei die Schneidkante durch Drehung um die Drehachse den Sacklochdurchmesser definiert, wobei der Schaft einen sich entlang der Drehachse ändernden Hüllkreisdurchmesser aufweist, welcher an der Anschlagschulter grösser als der Sacklochdurchmesser ist, wobei der Schaft einen zwischen der Schneidkante und der Anschlagschulter angeordneten ersten Schaftabschnitt aufweist, welcher bis an die Anschlagschulter heranreicht und in welchem der Hüllkreisdurchmesser kleiner als der Sacklochdurchmesser ist.

2. Bohrer nach Anspruch 1, wobei der Schaft einen zwischen der Schneidkante und dem ersten Schaftabschnitt angeordneten zweiten Schaftabschnitt aufweist, welcher bis an die Schneidkante heranreicht und in welchem der Hüllkreisdurchmesser konstant und gleich gross wie der Sacklochdurchmesser ist.

3. Bohrer nach Anspruch 2, wobei der zweite Schaftabschnitt an den ersten Schaftabschnitt heranreicht.

4. Bohrer nach Anspruch 1, wobei der erste Schaftabschnitt an die Schneidkante heranreicht.

5. Bohrer nach einem der vorhergehenden Ansprüche, wobei der erste Schaftabschnitt und die Schneidkante aus demselben Material bestehen und miteinander einstückig ausgebildet sind.

6. Bohrer nach einem der vorhergehenden Ansprüche, wobei der Hüllkreisdurchmesser in dem ersten Schaftabschnitt bereichsweise, insbesondere durchgehend, in der Bohrrichtung ansteigt, insbesondere linear ansteigt.

7. Bohrer nach einem der vorhergehenden Ansprüche, wobei der Hüllkreisdurchmesser in dem ersten Schaftabschnitt bereichsweise, insbesondere durchgehend, konstant ist.

8. Bohrer nach einem der vorhergehenden Ansprüche, wobei der Schaft an seinem in die Bohrrichtung weisenden Ende eine Zentrierspitze aufweist, durch welche die Drehachse verläuft.

9. Bohrer nach einem der vorhergehenden Ansprüche, wobei die Anschlagschulter eine senkrecht zur Drehachse ausgerichtete und in die Bohrrichtung weisende Anschlagfläche aufweist.

10. Bohrer nach einem der vorhergehenden Ansprüche, wobei der Schaft an seinem entgegen die Bohrrichtung weisenden Ende einen Befestigungsabschnitt, insbesondere ein Einsteckende, für eine vorübergehende Befestigung an einer handgeführten Bohrmaschine aufweist.
